# EUROPEAN PATENT APPLICATION

(11) **EP 2 775 783 A2**
(43) Date of publication of application: **10.09.2014**
(21) Application number: 13169428.3
(22) Date of filing: 28.05.2013
(51) Int. Cl.: H05B 6/06, H05B 6/12

(54) **Electromagnetic induction heater with increased heating range**

(30) Priority: 08.03.2013 TW 102108155
(71) Applicant: Delta Electronics, Inc., Taoyuan Hsien 333 (TW)
(72) Inventor: Lin, I-Shen, Chungli Industrial Zone Taoyuan Hsien 320 (TW)
(74) Representative: 2K Patentanwälte Blasberg Kewitz & Reichel

(57) **Abstract**

An electromagnetic induction heater (1) includes a supporting plate (11) and a plurality of first induction coils (12). The supporting plate (11) has a heating zone (110) for placing at least one foodstuff container (2) thereon. The heating zone (110) includes a plurality of sub-heating zones (120). The first induction coils (12) are located at the positions corresponding to the sub-heating zones (120) respectively for heating the at least one foodstuff container (2). The first induction coils (12) have elliptic profiles, and are located at an inner side of the supporting plate (11).

## Description

### FIELD OF THE INVENTION

The present invention relates to an electromagnetic induction heater, and more particularly to an electromagnetic induction heater with an increased heating range.

### BACKGROUND OF THE INVENTION

With increasing development and advance of electronic industries, a variety of information home appliances such as electric cookers, induction cookers or microwave ovens are widely used to cook food. Moreover, these information home appliances gradually become essential electric devices in our daily lives.

For example, an induction cooker is used to cook food according to electromagnetic induction. When a current flows through an induction coil of the induction cooker, a conductor such as a foodstuff container (e.g. an iron pot, a stainless steel pot or a metal pot) is placed in a magnetic field which varies with time. Consequently, the magnetic flux passing through the conductor will change with time, and an eddy current will be produced to resist the change of the magnetic flux. When the eddy current flows through a resistor, heat is generated. Since the eddy current can quickly heat the conductor (i.e. the foodstuff container), the food within the foodstuff container can be effectively cooked.

Nowadays, the home-use induction cooker is usually equipped with plural heating zones. For example, the induction cooker comprises a main heating zone, a first minor heating zone and a second minor heating zone for heating a plurality of foodstuff containers simultaneously. The first minor heating zone and the second minor heating zone are located at a side of the main heating zone. Moreover, the first minor heating zone and the second minor heating zone can be independently operated to heat the foodstuff containers. The conventional induction cooker further comprises a first temperature sensor and a second temperature sensor corresponding to the first minor heating zone and the second minor heating zone for sensing the temperatures of the corresponding induction coils respectively when the foodstuff containers are heated.

Conventionally, the foodstuff container should be precisely placed on the first minor heating zone or the second minor heating zone in order to be heated. Moreover, the suitable shape or size of the foodstuff container is restricted by the arrangement of the corresponding induction coil of the first minor heating zone or the second minor heating zone. That is, if the foodstuff container is not precisely placed on the first minor heating zone or the second minor heating zone or if the foodstuff container is too large to be placed on the first minor heating zone or the second minor heating zone individually, the foodstuff container may be spanned across the first minor heating zone and the second minor heating zone. Under this circumstance, the foodstuff container fails to be effectively heated. Even if the foodstuff container can be heated, the effectively heat quantity for heating the foodstuff container by the induction coil corresponding to the first minor heating zone or the second minor heating zone is very low, and the reactive power and the current magnitude of the induction coil are correspondingly increased. Consequently, the induction coil is easily burnt out, or the power consumption is increased.

In addition, after the foodstuff container on the first minor heating zone has been heated for a certain time period, if the foodstuff container is moved to the second minor heating zone, the induction coil corresponding to the second minor heating zone is enabled to heat the foodstuff container. Moreover, there is a temperature difference between the first minor heating zone (with the higher temperature) and the second minor heating zone (with the lower temperature). If the temperature difference is larger than a preset value, a controller of the induction cooker will disable the induction coil of the first minor heating zone. Consequently, since the induction coil of the first minor heating zone is not continuously enabled, the reactive power and the current magnitude of the induction coil are reduced, and possibility of burning out the induction coil is minimized.

Moreover, at the moment when the foodstuff container is moved from the first minor heating zone to the second minor heating zone, since the temperature of the second minor heating zone is lower than the temperature of the heated foodstuff container, the temperature detected by the second temperature sensor is low than the temperature of the heated foodstuff container at this moment. Under this circumstance, the controller of the induction cooker will enable the induction coil of the second minor heating zone to heat the foodstuff container with a higher heating power according to the temperature detected by the second temperature sensor. Consequently, the food within the foodstuff container is easily charred, or the foodstuff container is possibly burnt out. In addition, the reactive power and the current magnitude of the induction coil are increased, and the induction coil may be burnt out.

### SUMMARY OF THE INVENTION

It is an object of the present invention to provide an enhanced electromagnetic induction heater with an increased heating range in order to eliminate the above drawbacks.

This problem is solved by an electromagnetic induction heater according to claim 1 and 11, respectively. Further advantageous embodiments are the subject-matter of the dependent claims.

The present invention provides an electromagnetic induction heater for increasing the heating range by elaborately designing the profiles and the arrangement of plural induction coils. When the electromagnetic induction heater is operated in a free space mode, the heating power or the electric energy provided to the plural first induction coils may be correspondingly adjusted according to the position and the projection area of the foodstuff container. Consequently, even if the foodstuff container is not precisely placed on one of the sub-heating zones, the possibility of causing damage of the electromagnetic induction heater is minimized, and the performance of heating the foodstuff container is enhanced.

The present invention also provides an electromagnetic induction heater for providing an enlarged heating range in order to heat various foodstuff containers with different shapes at increased heating efficiency.

The present invention further provides an electromagnetic induction heater for adjusting the electric energy that is provided to plural induction coils, thereby enhancing the heating efficiency and reducing the power consumption of the plural induction coils.

The present invention further provides an electromagnetic induction heater with a temperature sensor for detecting the temperature of plural induction coils, thereby avoiding the over-heated problem of the plural induction coils and enhancing the safety of using the electric device.

In accordance with an aspect of the present invention, there is provided an electromagnetic induction heater. The electromagnetic induction heater includes a supporting plate and a plurality of first induction coils. The supporting plate has a heating zone for placing at least one foodstuff container thereon. The heating zone includes a plurality of sub-heating zones. The first induction coils are located at the positions corresponding to the sub-heating zones respectively for heating the at least one foodstuff container. The first induction coils have elliptic profiles, and are located at an inner side of the supporting plate.

In accordance with another aspect of the present invention, there is provided an electromagnetic induction heater. The electromagnetic induction heater includes a supporting plate and a plurality of first induction coils. The supporting plate has a heating zone for placing at least one foodstuff container thereon. The first induction coils have elliptic profiles, and are located at an inner side of the supporting plate. The heating zone comprises a plurality of sub-heating zones, and the first induction coils are corresponding to the sub-heating zones respectively for heating the at least one foodstuff container. When the at least one foodstuff container is placed on the sub-heating zones simultaneously, the foodstuff container has a plurality of projection areas covering the sub-heating zones respectively. The electric energy provided to the first induction coils are correspondingly controlled and adjusted according to a ratio of the projection areas of the at least one foodstuff container covering the sub-heating zones.

It is noted that the features specified by the dependent claims of the above first aspect of the invention can also be combined with the features specified by the above other aspect of the invention.

The above contents of the present invention will become more readily apparent to those ordinarily skilled in the art after reviewing the following detailed description and accompanying drawings, in which:

### BRIEF DESCRIPTION OF THE DRAWINGS

- FIG. 1: is a schematic perspective view illustrating the outward appearance of an electromagnetic induction heater according to an embodiment of the present invention;
- FIG. 2: is a schematic cross-sectional view illustrating two first induction coils and a second induction coil of the electromagnetic induction heater according to the embodiment of the present invention;
- FIG. 3: is a schematic circuit block diagram illustrating a circuit module used in the electromagnetic induction heater according to the embodiment of the present invention; and
- FIG. 4: is a schematic cross-sectional view illustrating the electromagnetic induction heater according to the embodiment of the present invention, in which a foodstuff container is placed on the electromagnetic induction heater.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

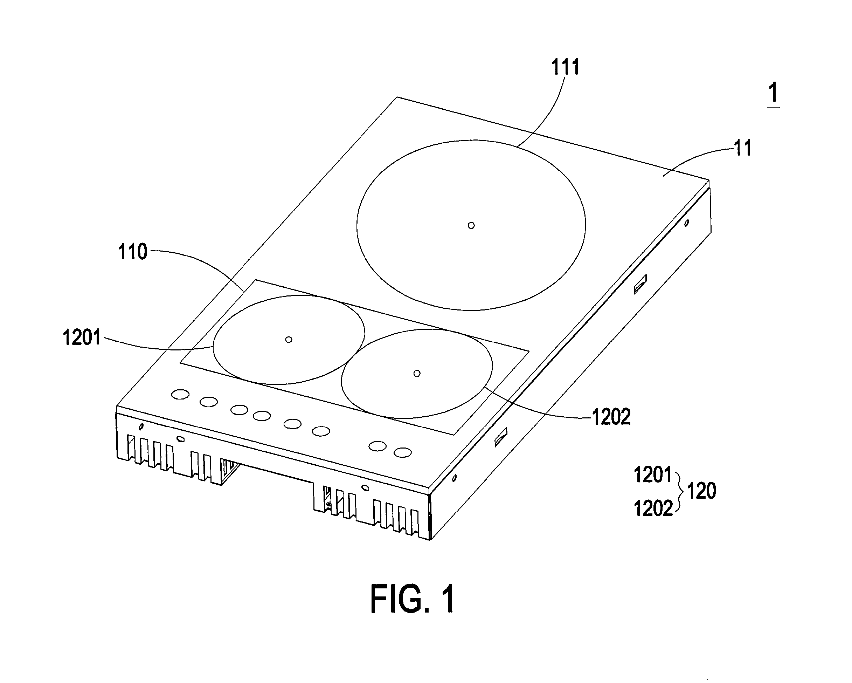

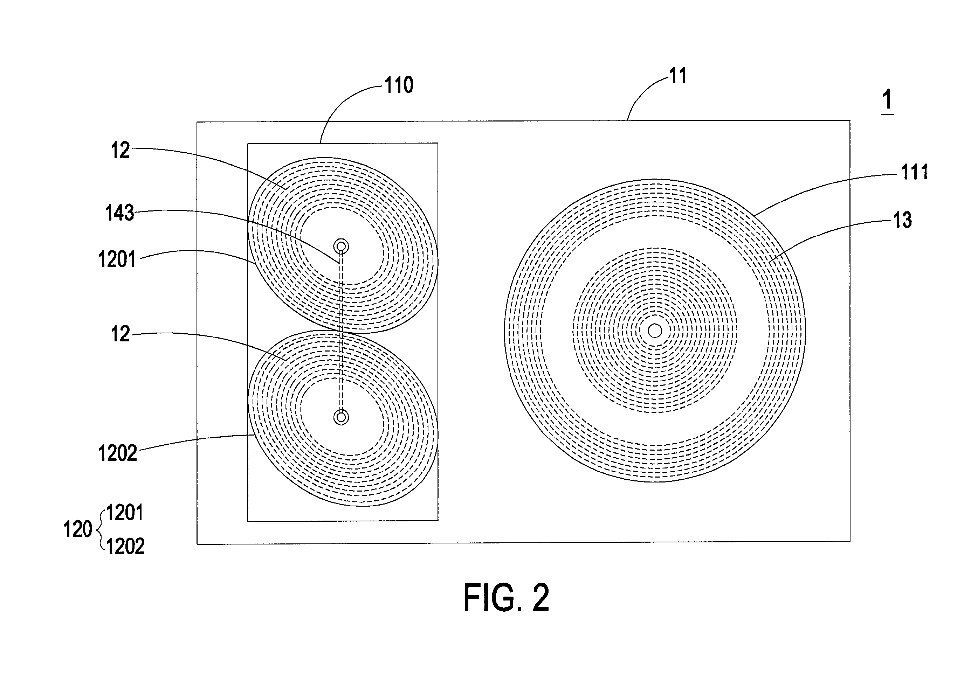

FIG. 1 is a schematic perspective view illustrating the outward appearance of an electromagnetic induction heater according to an embodiment of the present invention. FIG. 2 is a schematic cross-sectional view illustrating two first induction coils and a second induction coil of the electromagnetic induction heater according to the embodiment of the present invention. An example of the electromagnetic induction heater 1 included but is not limited to an induction cooker. As shown in FIGS. 1 and 2, the electromagnetic induction heater 1 comprises a supporting plate 11 and a plurality of first induction coils 12. The supporting plate 11 has a heating zone 110. A foodstuff container (not shown) may be placed on the heating zone 110 to be heated. In this embodiment, the foodstuff container is a conductor pot (e.g. a metal pot). The plural first induction coils 12 have elliptic profiles, and are located at an inner side of the supporting plate 11. The heating zone 110 comprises a plurality of sub-heating zones 120 corresponding to the plural first induction coils 12, respectively. In this embodiment, the plural first induction coils 12 are contacted with each other. Alternatively, in some other embodiments, the plural first induction coils 12 may be separated from each other.

Please refer to FIGS. 1 and 2 again. In this embodiment, electromagnetic induction heater 1 is equipped with plural heating zones. The electromagnetic induction heater 1 further comprises a second induction coil 13. The second induction coil 13 is also located at the inner side of the supporting plate 11. Moreover, the area of the second induction coil 13 is larger than the area of the first induction coil 12. The second induction coil 13 is used for heating a larger-sized foodstuff container (not shown). The coverage range of the second induction coil 13 is equivalent to a heating zone 111. The plural first induction coils 12 are located at a side of the second induction coil 13, but are not limited thereto. In this embodiment, the plural first induction coils 12 comprise two first induction coils 12 with the elliptic profiles. The heating zone 110 comprises two sub-heating zones 120 including a first sub-heating zone 1201 and a second sub-heating zone 1202 corresponding to the two first induction coils 12, respectively. It is noted that the numbers of the first induction coils 12 and the sub-heating zones 120 may be varied according to the practical requirements. These plural first induction coils 12 have elliptic profiles, and are contacted with each other. In comparison with the circular induction coils of the conventional electromagnetic induction heater, the first induction coils 12 with the elliptic profiles are more advantageous. For example, when the foodstuff container is placed at a middle region of the heating zone 110, the overall contact area between the two adjacent sub-heating zones 120 and the foodstuff container is increased. Consequently, the efficiency of the electromagnetic induction heater 1 to heat the foodstuff container is enhanced. Moreover, the electromagnetic induction heater 1 is suitable to heat various foodstuff containers with different shapes (e.g. square profiles).

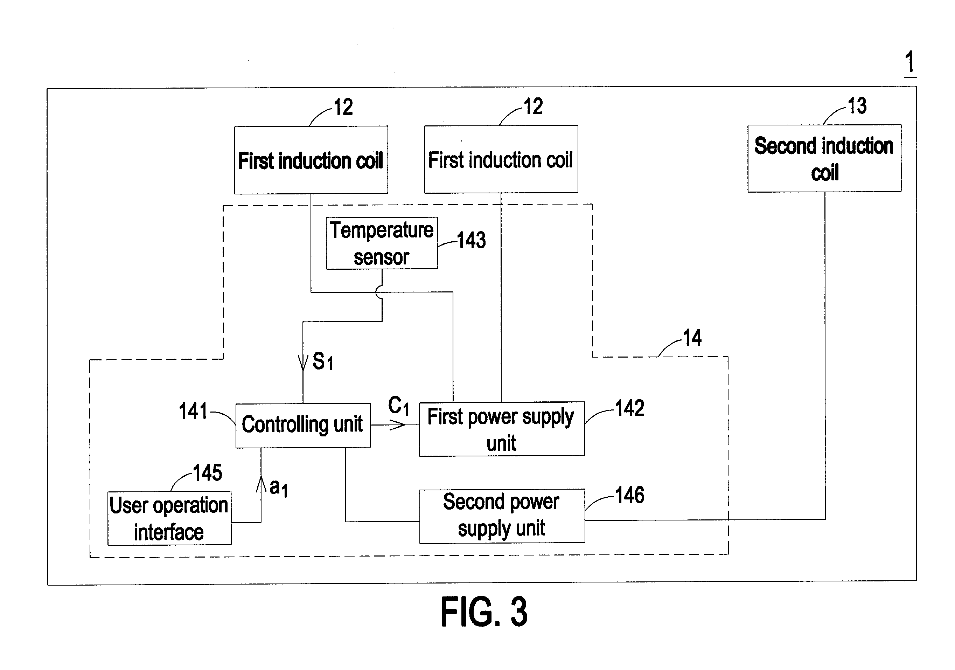

Moreover, the electromagnetic induction heater 1 further comprises a circuit module for controlling the operations of the electromagnetic induction heater 1. FIG. 3 is a schematic circuit block diagram illustrating a circuit module used in the electromagnetic induction heater according to the embodiment of the present invention. As shown in FIG. 3, the circuit module 14 of the electromagnetic induction heater 1 comprises a controlling unit 141, a first power supply unit 142, a temperature sensor 143, and a user operation interface 145. The temperature sensor 143 is used for sensing the temperature of the plural first induction coils 12, thereby generating a temperature sensing signal S₁. The first power supply unit 142 is electrically connected with the plural first induction coils 12 for providing electric energy to the plural first induction coils 12. Consequently, the plural first induction coils 12 may heat the foodstuff container according to electromagnetic induction. The controlling unit 141 is electrically connected with the temperature sensor 143, the first power supply unit 142 and the user operation interface 145. According to the temperature sensing signal S₁ from the temperature sensor 143, the controlling unit 141 issues a control signal C₁ to the first power supply unit 142. According to the control signal C₁, the heating power or the electric energy provided from the first power supply unit 142 to each first induction coil 12 is correspondingly controlled and adjusted. The user operation interface 145 is electrically connected with the controlling unit 141. In response to an input of the user, the user operation interface 145 issues an operating signal a₁ to the controlling unit 141.

In this embodiment, the circuit module 14 further comprises a second power supply unit 146. The second power supply unit 146 is electrically connected with the controlling unit 141 and the second induction coil 13 for providing electric energy to the second induction coil 13. Consequently, the second induction coil 13 may heat the foodstuff container placed on the heating zone 111 (as shown in FIG. 1) according to electromagnetic induction.

Optionally, in an embodiment, the circuit module 14 further comprises a plurality of position detectors (not shown in FIG. 3) located beside the first induction coils 12 respectively for detecting a position of the at least one foodstuff container on the heating zone 110 and a projection area of the at least one foodstuff container covering the heating zone 110, and generating a plurality of detecting signals to the controlling unit 141 correspondingly.

In accordance with the present invention, the electromagnetic induction heater 1 may be operated in a free space mode. In the free space mode, a foodstuff container may be placed at an arbitrary position of the heating zone 110. Namely, the foodstuff container may be placed on the first sub-heating zone 1201, the second sub-heating zone 1202 or an arbitrary position between these two sub-heating zones 1201 and 1202. When the foodstuff container is placed on the first sub-heating zone 1201 or the second sub-heating zone 1202, the induction coil 12 corresponding to the first sub-heating zone 1201 or the second sub-heating zone 1202 is enabled to heat the foodstuff container. When the foodstuff container is placed on a middle region between the first sub-heating zone 1201 and the second sub-heating zone 1202, one or both of the induction coils 12 corresponding to the first sub-heating zone 1201 and the second sub-heating zone 1202 are enabled to heat the foodstuff container according to settings. That is, it is not necessary to align the foodstuff container with one of the plural sub-heating zones 120. When the electromagnetic induction heater 1 is operated in the free space mode, the heating power or the electric energy provided to each of the plural first induction coils 12 may be controlled and adjusted according to the position of the foodstuff container on the heating zone 110 of the supporting plate 11. Consequently, the foodstuff container may be placed at an arbitrary position of the heating zone 110 to be heated, and the performance of heating the foodstuff container is enhanced.

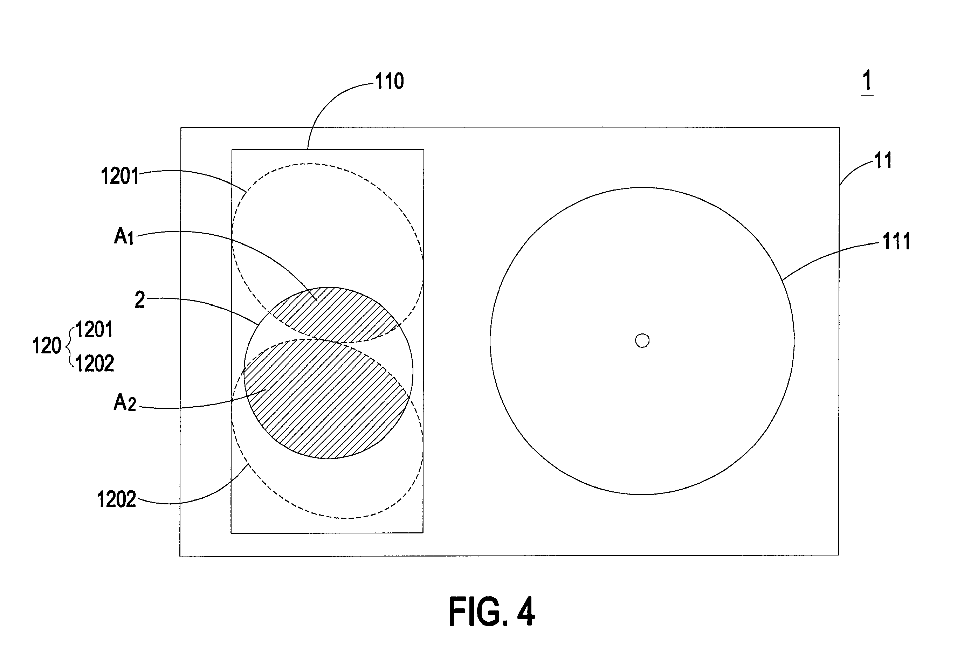

FIG. 4 is a schematic cross-sectional view illustrating the electromagnetic induction heater according to the embodiment of the present invention, in which a foodstuff container is placed on the electromagnetic induction heater. As shown in FIGS. 3 and 4, in this situation, the operating mode of the electromagnetic induction heater 1 is switched to the free space mode, and the foodstuff container 2 is placed on a middle region covering portions of the two sub-heating zones 120 (i.e. the first sub-heating zone 1201 and the second sub-heating zone 1202), which are corresponding to two induction coils 12 respectively. According to the position of the foodstuff container 2, the heat quantity of the corresponding first induction coil 12 is determined. For example, according to the ratio of the projection area of the foodstuff container 2 covering the first sub-heating zone 1201 to the projection area of the foodstuff container 2 covering the second sub-heating zone 1202, the controlling unit 141 issues a control signal C₁ to the first power supply unit 142. According to the control signal C₁, the heating power or the electric energy provided from the first power supply unit 142 to each first induction coil 12 is correspondingly adjusted. Consequently, the heating power or the electric energy provided to the first induction coils 12 can be automatically adjusted according to the projection area ratio of the foodstuff container 2.

Please refer to FIGS. 3 and 4 again. There projection areas of the foodstuff container 2 covering the two sub-heating zones 120 (i.e. the first sub-heating zone 1201 and the second sub-heating zone 1202) are equal to a first projection area A₁ and a second projection area A₂, respectively. In this embodiment, the first projection area A₁ is smaller than the second projection area A₂. Alternatively, in some other embodiments, the first projection area A₁ may be larger than or equal to the second projection area A₂. According to the ratio of the first projection area A₁ to the second projection area A₂, the controlling unit 141 issues a control signal C₁ to the first power supply unit 142. According to the control signal C₁, the heating power or the electric energy provided from the first power supply unit 142 to the two first induction coils 12 will be correspondingly controlled and adjusted. In other words, the heating power or the electric energy provided to the first induction coils 12 can be automatically controlled and adjusted according to the ratio of the projection area of the foodstuff container 2 covering the first sub-heating zone 1201 to the projection area of the foodstuff container 2 covering the second sub-heating zone 1202.

From the above discussions, even if the foodstuff container 2 is not precisely placed on one of the sub-heating zones 120, the heating power or the electric energy provided to the each first induction coil 12 can be automatically adjusted according to the ratio of the first projection area A₁ to the second projection area A₂. Moreover, since the first induction coils 12 have elliptic profiles, when the foodstuff container 2 is placed at a middle region of the heating zone 110, the overall contact area between the two adjacent sub-heating zones 120 and the foodstuff container 2 will be increased. As a consequence, the efficiency of the electromagnetic induction heater 1 to heat the foodstuff container 2 is enhanced, and the plural first induction coils 12 generate less reactive power.

In some other embodiments, if the first projection area A₁ of the foodstuff container 2 covering the first sub-heating zone 1201 is smaller than a threshold area, it mean that the foodstuff container 2 is moved from the first sub-heating zone 1201 to the second sub-heating zone 1202 or the majority of the foodstuff container 2 is disposed on the second sub-heating zone 1202. Under this circumstance, the controlling unit 141 may control the first power supply unit 142 to stop providing the electric energy to the first induction coil 12 corresponding to the first sub-heating zone 1201. In other words, the foodstuff container 2 is directly heated by the first induction coil 12 corresponding to the second sub-heating zone 1202. Since less reactive power is generated, the heating performance is not deteriorated and the power consumption is not largely increased.

Please refer to FIGS. 2 and 3 again. The electromagnetic induction heater 1 comprises a single temperature sensor 143. The temperature sensor 143 is located beside the plural first induction coils 12 for sensing the temperatures of the plural first induction coils 12. If the temperature of one of the plural first induction coils 12 is higher than a threshold temperature, the temperature sensor 143 issues a temperature sensing signal S₁ to the controlling unit 141. In response to the temperature sensing signal S₁, the controlling unit 141 issues a control signal C₁ to the first power supply unit 142. Under this circumstance, the controlling unit 141 may control the first power supply unit 142 to stop providing the electric energy to each of the plural first induction coils 12. Meanwhile, the foodstuff container 2 is no longer heated by the plural first induction coils 12. Since the first induction coils 12 are not over-heated, the possibility of causing damage of the first induction coils 12 or the electromagnetic induction heater 1 is minimized, and the safety of using the electric device is enhanced.

From the above descriptions, the present invention provides an electromagnetic induction heater with an increased heating range. Due to the elliptic profiles and the arrangement of the plural first induction coils, when the foodstuff container is placed at a middle region of the heating zone, the overall contact area between the two adjacent sub-heating zones and the foodstuff container will be increased. Consequently, the efficiency of the electromagnetic induction heater to heat the foodstuff container is enhanced. Moreover, the electromagnetic induction heater is suitable to heat various foodstuff containers with different shapes. Moreover, the electromagnetic induction heater of the present invention is capable of detecting the position and the projection area of the foodstuff container. When the electromagnetic induction heater is operated in the free space mode, the heating power or the electric energy provided to the plural first induction coils may be correspondingly adjusted according to the position and the projection area of the foodstuff container. Consequently, even if the foodstuff container is not precisely placed on one of the sub-heating zones, the possibility of causing damage of the electromagnetic induction heater is minimized, and the performance of heating the foodstuff container is enhanced. The electromagnetic induction heater further comprises a temperature sensor for sensing the temperatures of the plural first induction coils. Since the first induction coils are not over-heated, the possibility of causing damage of the first induction coils or the electromagnetic induction heater is minimized, and the safety of using the electric device is enhanced.

## Claims

1. An electromagnetic induction heater (1), comprising:
a supporting plate (11) having a heating zone (110) for placing at least one foodstuff container (2) thereon, wherein said heating zone (110) comprises a plurality of sub-heating zones (120); and
a plurality of first induction coils (12) corresponding to said sub-heating zones (120) respectively for heating said at least one foodstuff container (2), wherein said first induction coils (12) have elliptic profiles, and are located at an inner side of said supporting plate (11).

2. The electromagnetic induction heater according to claim 1, wherein said electromagnetic induction heater (1) is an induction cooker, and said foodstuff container (2) is a conductor pot.

3. The electromagnetic induction heater according to claim 1 or 2, wherein said first induction coils (12) are contacted with each other and located at said inner side of said supporting plate (11).

4. The electromagnetic induction heater according to any of the preceding claims, further comprising a circuit module (14), wherein said circuit module (14) comprises:
a first power supply unit (142) electrically connected with said first induction coils (12) for providing electric energy to said first induction coils (12); and
a controlling unit (141) electrically connected with said first power supply unit (142) for generating a control signal (C₁), wherein according to said control signal (C₁), the electric energy provided from said first power supply unit (142) to said first induction coils (12) are correspondingly adjusted.

5. The electromagnetic induction heater according to claim 4, wherein said circuit module (14) further comprises a temperature sensor (143), which is located beside said first induction coils (12) for sensing temperatures of said first induction coils (12).

6. The electromagnetic induction heater according to claim 5, wherein if said temperature of one of said first induction coils (12) detected by said temperature sensor (143) is higher than a threshold temperature, said controlling unit (141) issues said control signal (C₁) to said first power supply unit (142), thereby controlling said first power supply unit (142) to stop providing electric energy to said first induction coils (12).

7. The electromagnetic induction heater according to any of claims 4 to 6, wherein said circuit module (14) further comprises a plurality of position detectors located beside said first induction coils (12) respectively for detecting a position of said at least one foodstuff container (2) on said heating zone (110) and a projection area of said at least one foodstuff container (2) covering said heating zone (110), and generating a plurality of detecting signals to said controlling unit (141) correspondingly.

8. The electromagnetic induction heater according to any of the preceding claims, wherein said heating zone (110) comprises a first sub-heating zone (1201) and a second sub-heating zone (1202), and two of said first induction coils (12) are corresponding to said first sub-heating zone (1201) and said second sub-heating zone (1202) respectively, wherein when said at least one foodstuff container (2) is placed on said first sub-heating zone (1201) and said second sub-heating zone (1202) simultaneously, said foodstuff container (2) has a first projection area (A₁) covering said first sub-heating zone (1201), and a second projection area (A₂) covering said second sub-heating zone (1202).

9. The electromagnetic induction heater according to claim 8, wherein the electric energy provided from said first power supply unit (142) to said two first induction coils (12) is correspondingly controlled and adjusted by said controlling unit (141) according to a ratio of said first projection area (A₁) to said second projection area (A₂).

10. The electromagnetic induction heater according to any of the preceding claims, further comprising a second induction coil (13), wherein said second induction coil (13) is located at said inner side of said supporting plate (11), and located at a side of said first induction coils (12).

11. An electromagnetic induction heater (1), comprising:
a supporting plate (11) having a heating zone (110) for placing at least one foodstuff container (2) thereon; and
a plurality of first induction coils (12), each of which has an elliptic profile, and is located at an inner side of said supporting plate (11),
wherein said heating zone (110) comprises a plurality of sub-heating zones (120), and said first induction coils (12) are corresponding to said sub-heating zones (120) respectively for heating said at least one foodstuff container (2), wherein when said at least one foodstuff container (2) is placed on said sub-heating zones (120) simultaneously, said foodstuff container (2) has a plurality of projection areas covering said sub-heating zones (120) respectively, wherein the electric energy provided to said first induction coils (12) are correspondingly controlled and adjusted according to a ratio of said projection areas of said at least one foodstuff container (2) covering said sub-heating zones (120).
